# EUROPÄISCHE PATENTSCHRIFT

(11) **EP 0 347 523 B1**
(45) Veröffentlichungstag und Bekanntmachung des Hinweises auf die Patenterteilung: **25.08.1993**
(21) Anmeldenummer: 89103376.3
(22) Anmeldetag: 27.02.1989
(51) Int. Cl.: F16D 55/224, F16D 65/04

(54) **Scheibenbremse mit unverwechselbaren Bremsklötzen**
Disc brake with non-interchangeable brake pads
Frein à disque à machoires non interchangeables

(30) Priorität: 11.05.1988 DE 3816109
(43) Veröffentlichungstag der Anmeldung: 27.12.1989
(73) Patentinhaber: ITT Automotive Europe GmbH, 60488 Frankfurt (DE)
(72) Erfinder: Kretzer, Horst, D-6000 Frankfurt/Main 90 (DE); Beldzik, Peter, D-6000 Frankfurt/Main (DE); Pohl, Bernd, D-6392 Neu-Anspach (DE)

(56) Entgegenhaltungen:
- DE-A- 2 549 865
- DE-A- 2 919 535
- DE-A- 3 014 057
- DE-A- 3 149 883
- US-A- 4 473 137

## Beschreibung

In neuerer Zeit werden Bremsbeläge im wachsenden Maße immer mehr von ungeschulten Kräften eingebaut. Da nun Bremsen und insbesondere die Bremsbeläge für die Sicherheit eines Fahrzeugs besonders wichtige Bauteile sind, scheint es notwendig, hier Vorsichtsmaßnahmen zu treffen. Das Problem vergrößert sich insbesondere dadurch, daß an der gleichen Bremse vielfach unterschiedlich ausgestaltete Bremsklötze verwendet werden, um den immer höheren an die Leistung der Bremse zu stellenden Anforderungen gerecht zu werden. Diese voneinander abweichenden Bremsklötze werden dann in Form von Bausätzen den ungeschulten Kräften ausgehändigt.

Aus der US-PS 44 73 137 ist es bekannt, den Einbau fehlerhafter Bremsklötze dadurch zu verhindern, daß diese nur mit Hilfe eines passenden Schlüssels montiert werden können. Das dort vorgeschlagene System ist aber nun insofern nachteilig, weil die Bremsbeläge auch ohne Schlüssel verbaut werden können, wobei eine falsche Einbaulage sowie mögliches Verlieren der Beläge nicht ausgeschlossen ist.

Aus der DE-A-29 19 535 ist bekannt, einen kolbenseitigen Bremsklotz einer Schwimmsattel-Scheibenbremse mit einer Belagmasse zu versehen, die sich in Umfangsrichtung nicht über die gesamte Länge der Rückenplatte erstreckt, während sich die Belagmasse des äußeren Bremsklotzes bis an die Randbereiche der Rückenplatte erstrecken. Die Arme des Bremsträgers sind derart angeordnet, daß bei einer unabsichtlichen Vertauschung der beiden Bremsklötze die Belagmasse des äußeren Bremsklotzes in dem Randbereich an den Armen anstößt und damit der Bremsklotz nicht innenseitig eingesetzt werden kann.

Bei einer anderen Scheibenbremse, die aus de DE-A-25 49 865 bekannt ist, wird die Vertauschung von innerem und äußerem Bremsklotz dadurch ausgeschlossen, daß die beiden Bremsklötze mit unterschiedlichen Vorsprüngen ausgestattet sind, die in Umfangsrichtung von den Rückenplatten abstehen. Die Vorsprünge sind zur Abstützung der Umfangskräfte mit Abstützflächen versehen, die an zugehörigen komplementär ausgeformten Abstützflächen des Bremsträgers anliegen. Die Abstützflächen des inneren Bremsklotzes sind halbkreisförmig, die des äußeren Bremsklotzes rechteckförmig ausgestaltet, so daß bei einer Vertauschung die Bremsklötze nicht eingebaut werden können.

Die Erfindung geht daher aus von einer Scheibenbremse, der sich aus dem Oberbegriff des Hauptanspruchs ergebenden Gattung und hat sich zur Aufgabe gestellt, die Bremse selbst sowie die zugehörigen Beläge derart auszugestalten, daß in einfacher und kostengünstiger Weise nur die vorgesehenen Beläge an die vorgesehene Stelle eingebaut werden können.

Die Lösung der gestellten Aufgabe ergibt sich aus der aus dem kennzeichnenden Teil des Hauptanspruchs ersichtlichen Merkmalskombination. Die Erfindung besteht im Prinzip also darin, an den Führungsflächen des Trägers und/oder des Gehäuses sowie an den zugehörigen Flächen der Trägerplatte des Bremsklotzes Ausnehmungen bzw. Vorsprünge vorzusehen, welche in Form eines fest mit der Bremse bzw. den Bremsklötzen verankerten Schlüssels nur den Einbau des richtigen Bremsklotzes an der richtigen Stelle gestatten.

Üblicherweise werden die für die Rückenplatte des Bremsklotzes vorgesehenen Führungsflächen durch Räumen aus dem gegossenen Träger bzw. gegossenen Gehäuse herausgearbeitet. Derartige Räumwerkzeuge sind aber sehr teuer, so daß man bestrebt ist, das gleiche Räumwerkzeug möglichst oft und damit bei an sich voneinander abweichenden Bremsen einzusetzen. Um nun trotz der gewünschten Verschlüsselung der Führungsflächen mit sich änderndem Schlüssel nicht das Räumwerkzeug auswechseln zu müssen, empfiehlt sich in Weiterbildung der Erfindung eine Merkmalskombination gemäß den Ansprüchen 2 und 3. Diese Verbesserung besteht im wesentlichen darin, die verschlüsselnden Ansätze nicht durch Räumen herauszuarbeiten, sondern sie schon während des Gießvorgangs an geeigneten Stellen an dem Gehäuse oder dem Träger anzugießen, wie sie in Anspruch 2 genauer beschrieben sind.

Um die Maßnahmen nach Anspruch 2 oder 3 durchzuführen, ist es günstig, die Merkmalskombination nach Anspruch 4 zu wählen, da hier geometrisch der ausreichende Platz für entsprechende Ansätze an den Trägerarmen zur Verfügung steht. Im übrigen ist es wichtig, diese Ansätze möglichst nicht an Flächen vorzusehen, die durch erhebliche Kräfte, wie beispielsweise die in tangentialer Richtung aufzunehmenden Bremskräfte, belastet sind.

Die dem Ansatz an der Bremse entsprechende Ausnehmung an der Rückenplatte läßt sich vorteilhaft durch die in Anspruch 5 angegebene Maßnahme gewinnen. Das hierfür notwendige Stanzverfahren ist relativ einfach und flexibel handhabbar.

Um die unterschiedlich verschlüsselten Bremsklötze, bis auf die Verschlüsselung möglichst in der gleichen Serie herstellen zu können, empfiehlt sich in Weiterbildung der Erfindung die Merkmalskombination nach Anspruch 6. Es werden also erst nach dem Aufbringen der Beläge die für einen bestimmten Bremsentyp als Schlüssel dienenden Ausnehmungen aus der Rückenplatte des Bremsklotzes herausgestanzt.

In der Praxis spielt sich der Versuch, einen falschen Bremsklotz in die Bremse einzubauen dergestalt ab, daß wegen der fehlenden Ausnehmung in der falschen Rückenplatte der Bremsklotz auf dem als Schlüssel liegenden Ansatz aufliegt und daher gegenüber dem ordnungsgemäßen, in Höhe des Schlüsselansatzes ein entsprechender Ausnehmung aufweisenden Bremsklotz in radialer Richtung höher liegt. Hierdurch läßt sich aber das Gehäuse nicht montieren (Bolzen können nicht eingeschraubt werden) und der Gehäusedeckel der Bremse nicht mehr schließen, so daß die Arbeiten an der Bremse mit falschem Bremsklotz nicht mehr fortgeführt werden können.

Eine andere eventuell zusätzliche Verschlüsselungsmöglichkeit des Bremsträgers bzw. des Gehäuses wird in Anspruch 7 vorgeschlagen. Diese Art der Verschlüsselung wird in vorteilhafter Weise durch eine Verschlüsselung der Trägerplatte gemäß Anspruch 8 ergänzt. Auch die durch Prägen der Trägerplatte sich ergebenden Ansätze lassen gemäß Anspruch 9 eine Verschlüsselung zu, nachdem der Bremsklotz in Serienherstellung bereits mit einem Bremsbelag versehen wurde. Die Merkmale gemäß Anspruch 7 bis 9 sind hervorragend geeignet, um beispielsweise die Verwechslung zweier zu einem Bausatz gehörender Bremsbeläge einer Bremse zu verhindern, indem es beispielsweise unmöglich gemacht wird, den kolbenseitigen Bremsklotz an der äußeren Bremsenseite zu verbauen und umgekehrt.

Zwei Ausführungsbeispiele der Erfindung werden nachfolgend anhand der Zeichnung erläutert. Darin zeigt
- Fig. 1: von der äußeren Seite her gesehen und in teilweise geschnittener Darstellung eine Scheibenbremse gemäß der Erfindung
- Fig. 2: aus der Sicht von Fig. 1 in abgebrochener Darstellung einen gegenüber Fig. 1 modifizierten Träger
- Fig. 3: eine Rückenplatte, die mit einem verschlüsselnden Ansatz versehen wurde sowie noch zusätzlich eine verschlüsselnde Ausnehmung enthält und
- Fig. 4: eine vergrößerte Darstellung eines Teils der Rückenplatte nach Fig. 3.

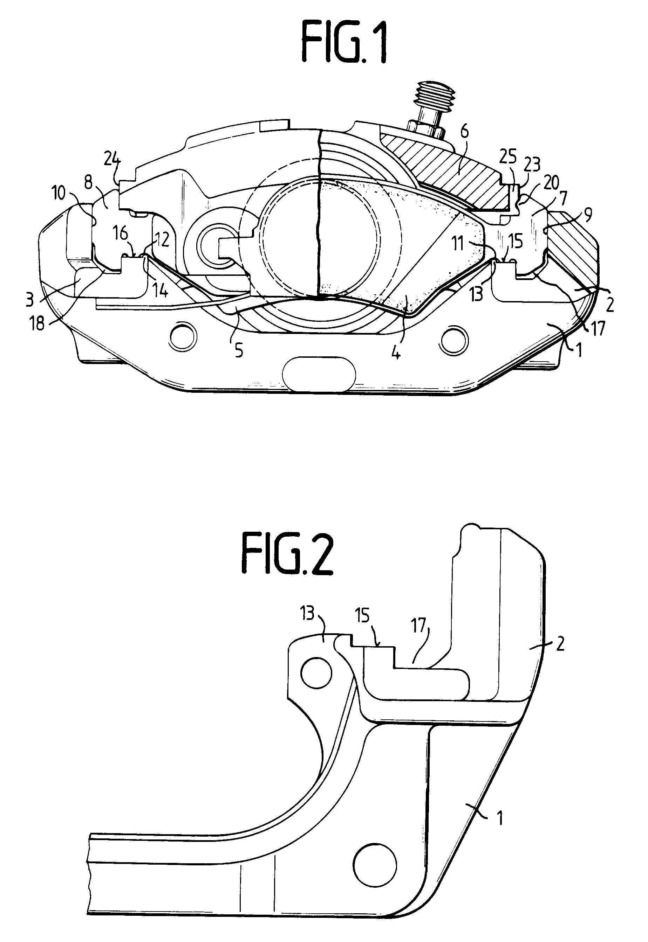

Fig. 1 zeigt von außen gesehen eine Teilbelag-Scheibenbremse. In dieser Beschreibung wird die dargestellte Bremse nur so weit beschrieben, wie es für das Verständnis der Erfindung unbedingt notwendig ist. Nähere Einzelheiten ergeben sich aus der DE-OS 37 07 156, in der die dargestellte Scheibenbremse näher erläutert ist.

Die Scheibenbremse nach Fig. 1 ist etwa in Höhe der senkrecht verlaufenden Symmetrieebene teilweise gebrochen dargestellt. Dabei ist die rechte Hälfte der Bremse etwa in Höhe des kolbenseitigen Bremsbelages aufgebrochen. Für die Erfindung wesentlich zeigt Fig. 1 den Träger der Scheibenbremse auf dessen Armen 2,3 sowohl der vordere kolbenseitige Bremsklotz 4, als auch der hintere äußere Bremsklotz 5 in axialer Richtung geführt werden.

Nach oben wird die Bremse durch ein Gehäuse 6 abgeschlossen, welches sich an seinem kolbenseitigen Ende auf zwei nicht dargestellten Bolzen und an seinem sichtbaren hinteren Ende in radialer und tangentialer Richtung an den beiden seitlichen Führungsenden 8 des hinteren Bremsklotzes 5 abstützt. Die Führungsenden 7 des vorderen Bremsklotzes bzw. die Führungsenden 8 des hinteren Bremsklotzes haben hammerförmige Gestalt, wobei die Stirnflächen 9 bzw. 10 des vorderen Bremsklotzes 7 bzw. des hinteren Bremsklotzes 8 zur Aufnahme tangential gerichteter Bremskräfte an den zugeordneten Flächen der Trägerarme 2 bzw. 3 anliegen.

Für die Erfindung wesentlich sind nun zwei Ausnehmungen 11 und 12, die paarweise an dem vorderen Bremsklotz 7 bzw. dem hinteren Bremsklotz 8 angeordnet sind.

Diese Ausnehmungen 11 bzw. 12 schaffen Raum für zwei Ansätze 13,14, die sich ausgehend von den in radialer Richtung weisenden Stützflächen 15 und 16 der Trägerarme 2 und 3 in radialer Richtung weisen.

Die Ansätze 13,14 können sich über die gesamte Länge der Trägerarme 2,3 in axialer Richtung erstrecken oder aber auch nur über den hinter der Bremsscheibe liegenden Teil der Arme (der hinsichtlich Arm 2 nicht gebrochen dargestellt ist). Dies richtet sich danach, ob nur dem kolbenseitigen (oder äußeren) Bremsklotz ein unverwechselbarer Schlüssel zugeordnet werden soll oder ob zwei gleichartige (aber gegenüber anderen Bremsentypen abweichende) Bremsklötze unverwechselbar eingebaut werden sollen.

Die Herstellung der Ansätze 13,14 der Arme 2,3 geschieht zweckmäßigerweise dadurch, daß diese Ansätze beim Gießvorgang des Trägers 1 mit angegossen werden und anschließend bei einem Räumvorgang der mit ihren Wänden die Bremsklötze führenden Führungsräume 17,18 die Ansätze 13,14 besonders plastisch herausgearbeitet werden. Wie aus Fig. 2 ersichtlich, kann der Ansatz 13 durch Gießen mehr oder weniger breit gestaltet werden, ohne daß der durch das Räumwerkzeug bestimmte Querschnitt des Führungsraums geändert werden braucht.

Die zu den Ansätzen 13,14 zugehörigen Ausnehmungen 11,12 der passenden Bremsklötze werden durch vorzugsweise Stanzen, aber auch durch eine andere Bearbeitungsart herausgearbeitet. Diese Bearbeitungsform ist preiswert und läßt sich auch bei verhältnismäßig kleinen Stückzahlen an bereits mit Belägen versehenen Bremsklötzen durchführen.

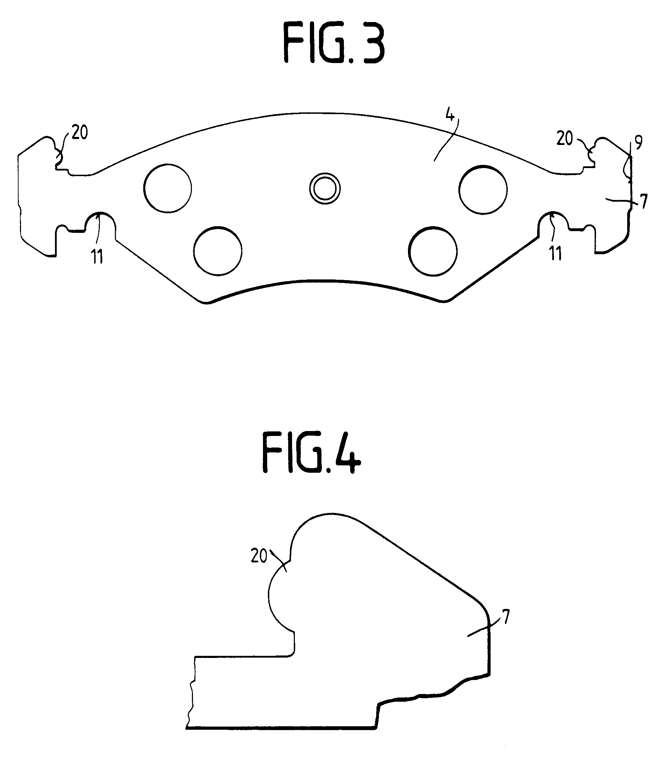

In Fig. 2 ist der Ansatz 13 bis zum für den Betrachter sichtbaren hinteren Ende des Trägers durchgeführt und gegenüber dem Ansatz 13 in Fig. 1 verbreitert ausgestaltet. In Fig. 3 sind die beiden zugehörigen Ausnehmungen 11 an beiden Seiten des kolbenseitigen vorderen Bremsklotzes 4 zu erkennen, wobei dieser Bremsklotz ohne den zugehörigen Bremsbelag dargestellt wurde. Die an der Trägerplatte des Bremsklotzes 4 erkennbaren kreisförmigen Öffnungen haben für die Erfindung keine Bedeutung und dienen herstellungstechnischen Zwecken für den gesamten Belag.

In Fig. 1 ist weiterhin an dem Führungsende 7 ein im wesentlichen kreissektorförmiger Ansatz 20 zu erkennen, der durch entsprechendes Prägen der oberen Hammerkopfhälfte herausgearbeitet ist. Dieser Ansatz schneidet die in axialer Richtung verlaufende Führungsfläche 23,24 des Gehäuses 6, so daß der Deckel nicht geschlossen werden könnte, wenn nicht in Höhe des in axialer Richtung verlaufenden Bewegungsraums des Führungselements 7 eine entsprechende Ausnehmung 25 in den Deckel eingearbeitet wäre.

Da diese Ausnehmung aber am äußeren, betrachterseitigen Ende des Gehäuses fehlt, könnte der Bremsklotz 7 nicht am äußeren Bremsenende eingebaut werden, sondern nur, wie in der Zeichnung gezeigt, kolbenseitig. Für das äußere Bremsenende eignet sich nur der Bremsklotz 5, der keinen dem Ansatz 20 entsprechenden Ansatz besitzt.

Durch diese Maßnahme ist gewährleistet, daß der kolbenseitige Bremsklotz mit dem äußeren Bremsklotz nicht vertauscht werden kann.

In Fig. 3 ist an der zum Bremsklotz 4 gehörenden Trägerplatte der kreissektorförmige Ansatz 20 ebenfalls dargestellt, der in Fig. 4 noch vergrößert herausgezeichnet wurde. Die verschiedenen hier beschriebenen Verschlüsselungsarten können entweder einzeln oder kombiniert angewendet werden, so daß entweder bestimmte identische Beläge in die zugehörige Bremse eingebaut werden können oder aber auch sichergestellt werden kann, daß kolbenseitige Bremsklötze nicht mit den äußeren Bremsklötzen verwechselt werden können.

## Patentansprüche

1. Scheibenbremse mit unverwechselbaren Bremsklötzen (4,5), bei der sich an dem Träger (1) die Rückenplatte zumindest eines Bremsklotzes (4 bzw. 5) und auf diesem wieder das Gehäuse (6) axial verschiebbar in tangentialer und radialer Richtung abstützt, dadurch **gekennzeichnet,** daß an einer oder mehreren Führungsflächen (9,10,15,16,23,24) des Trägers (1) und/oder des Gehäuses (6) sich zumindest über den axialen Weg der Rückenplatte (4,5) erstreckende Ansätze (13,14) oder Ausnehmungen (20) vorgesehen sind und die zugeordnete Rückenplatte (4,5) mit entsprechenden Ausnehmungen (11,12) bzw. Ansätzen (20) versehen ist, welche so groß bzw. so klein gewählt sind, daß deren Konturen (11,12 bzw. 20) die Konturen der zugehörigen Ansätze (13,14) bzw. Ausnehmungen (20) des Trägers (1) bzw. Gehäuses (6) nicht überschneiden.

2. Scheibenbremse nach Anspruch 1, dadurch **gekennzeichnet,** daß eine zur radialen Abstützung der Rückenplatte (4,5) dienende Führungsfläche (15,16) mit einem sich in axialer Richtung erstreckenden Ansatz (13,14) versehen ist.

3. Scheibenbremse nach Anspruch 2, dadurch **gekennzeichnet,** daß der Ansatz (13,14) angegossen ist oder angearbeitet ist.

4. Scheibenbremse nach Anspruch 2 oder 3, dadurch **gekennzeichnet,** daß der Ansatz (13,14) am zur Mittelebene der Bremse weisenden Rand der Führungsfläche (15,16) des Trägers (1) in radialer Richtung die Führungsfläche (15,16) überragt und sich in axialer Richtung erstreckt.

5. Scheibenbremse nach einem der Ansprüche 1 bis 4, dadurch **gekennzeichnet,** daß die Ausnehmung (11,12) der Rückenplatte (4,5) ausgestanzt ist.

6. Scheibenbremse nach Anspruch 5, dadurch **gekennzeichnet,** daß die Ausnehmung (11,12) nach dem Aufbringen des Belages ausgestanzt ist.

7. Scheibenbremse nach einem der Ansprüche 1 bis 6, dadurch **gekennzeichnet,** daß das Gehäuse (6) an einer in tangentialer Richtung weisenden Fläche (23,24) eine durch einen Gießvorgang gebildete Ausnehmung (25) aufweist.

8. Scheibenbremse nach Anspruch 7, dadurch **gekennzeichnet,** daß die zugehörige Trägerplatte (4) einen durch Prägen gebildeten Ansatz (20) aufweist.

9. Scheibenbremse nach Anspruch 7, dadurch **gekennzeichnet,** daß der Prägevorgang an der mit einem Bremsbelag versehenen Trägerplatte 4 erfolgt.

10. Scheibenbremse nach einem der Ansprüche 2 bis 4 oder Anspruch 7, dadurch **gekennzeichnet,** daß der Ansatz (13,14) bzw. die Ausnehmung (25) nur in Höhe des kolbenseitigen Bremsklotzes an dem Bremsenträger (1) bzw. Gehäuse (6) vorgesehen ist.

## Claims

1. A disc brake with noninterchangeable brake shoes (4, 5) in which the backplate of at least one brake shoe (4 or 5, respectively) takes axially slidably support at the carrier (1) in tangential and radial direction and on the said brake shoe (4 or 5, respectively), in its turn, the housing (6),
**characterized** in that projections (13, 14) or recesses (25) extending at least over the axial travel of the backplate (4, 5) are provided at one or at a plurality of guide areas (9, 10, 15, 16, 23, 24) of the carrier (1) and/or the housing (6), and in that the associated backplate (4, 5) is furnished with corresponding recesses (11, 12) or, respectively, projections (20) which are selected sufficiently large or, respectively, sufficiently small so that their contours (11, 12 or, respectively, 20) do not intersect the contours of the corresponding projections (13, 14) or, respectively, recesses (25) of the carrier (1) or, respectively, the housing (6).

2. A disc brake as claimed in claim 1,
**characterized** in that one guide area (15, 16) serving for the radial support of the backplate (4, 5) is provided with a projection (13, 14) extending in axial direction.

3. A disc brake as claimed in claim 2,
**characterized** in that the projection (13, 14) is cast on or worked on.

4. A disc brake as claimed in claim 2 or in claim 3,
**characterized** in that the projection (13, 14) surmounts the guide area (15, 16) of the carrier (1) in radial direction at the edge of the guide area (15, 16) pointing in the direction of the central plane of the brake and extends in axial direction.

5. A disc brake as claimed in any one of the claims 1 to 4,
**characterized** in that the recess (11, 12) of the backplate (4, 5) is punched out.

6. A disc brake as claimed in claim 5,
**characterized** in that the recess (11, 12) is punched out after the lining has been applied.

7. A disc brake as claimed in any one of the claims 1 to 6,
**characterized** in that the housing (6) is furnished with a recess (25) at an area (23, 24) pointing in tangential direction, the said recess (25) being formed by a casting process.

8. A disc brake as claimed in claim 7,
**characterized** in that the associated carrier plate (4) is furnished with a projection (20) which is formed by stamping.

9. A disc brake as claimed in claim 7,
**characterized** in that the stamping process takes place at the carrier plate (4) provided with a brake lining.

10. A disc brake as claimed in any one of the claims 2 to 4 or in claim 7,
**characterized** in that the projection (13, 14) or, respectively, the recess (25) is provided at the brake carrier (1) or, respectively, at the housing (6) only at the level of the piston-side brake shoe.

## Revendications

1. Frein à disque à plaquettes de frein (4, 5) ne pouvant pas être interverties, dans lequel la plaque de support d'au moins une plaquette de frein (4 ou 5) prend appui en direction tangentielle et en direction radiale sur le support (1) et le boîtier (6) prend lui-même appui en direction tangentielle et en direction radiale sur cette plaquette de frein d'une manière permettant un déplacement axial, caractérisé en ce que des saillies (13, 14) ou des évidements (20) s'étendant au moins sur l'étendue de la course axiale de la plaque de support (4, 5) sont prévues sur une ou plusieurs surfaces de guidage (9, 10, 15, 16, 23, 24) du support (1) et/ou du boîtier (6) et la plaque de support (4, 5) associée est pourvue d'évidements (11, 12) ou de saillies (20) correspondants qui sont choisis avec de plus ou moins grandes dimensions de façon que leurs contours (11, 12 ou 20) ne recoupent pas les contours des saillies (13, 14) ou évidements (20) associés du support (1) ou du boîtier (6).

2. Frein à disque suivant la revendication 1, caractérisé en ce qu'une surface de guidage (15, 16) servant à l'appui radial de la plaque de support (4, 5) est pourvue d'une saillie (13, 14) s'étendant en direction axiale.

3. Frein à disque suivant la revendication 2, caractérisé en ce que la saillie (13, 14) est réalisée au moulage ou par usinage.

4. Frein à disque suivant la revendication 2 ou 3, caractérisé en ce que la saillie (13, 14) prévue sur le bord de la surface de guidage (15, 16) du support (1) qui est tourné vers le plan central du frein fait saillie en direction radiale par rapport à la surface de guidage (15, 16) et s'étend en direction axiale.

5. Frein à disque suivant l'une des revendications 1 à 4, caractérisé en ce que l'évidement (11, 12) de la plaque de support (4, 5) est réalisé à l'emporte-pièce.

6. Frein à disque suivant la revendication 5, caractérisé en ce que l'évidement (11, 12) est réalisé à l'emporte-pièce après la mise en place de la garniture.

7. Frein à disque suivant l'une des revendications 1 à 6, caractérisé en ce que, sur une surface (23, 24) orientée en direction tangentielle, le boîtier (6) comporte un évidement (25) formé lors d'un moulage par coulée.

8. Frein à disque suivant la revendication 7, caractérisé en ce que la plaque de support (4) associée comporte une saillie (20) formée par matriçage.

9. Frein à disque suivant la revendication 7, caractérisé en ce que l'opération de matriçage est exécutée sur la plaquette de support (4) pourvue d'une garniture de frein.

10. Frein à disque suivant l'une des revendications 2 à 4 ou la revendication 7, caractérisé en ce que la saillie (13, 14) ou l'évidement (25) n'est prévu sur le support de frein (1) ou sur le boîtier (6) qu'au niveau de la plaquette de frein située du côté du piston.
